# EUROPÄISCHE PATENTSCHRIFT

(11) **EP 1 050 938 B1**
(45) Veröffentlichungstag und Bekanntmachung des Hinweises auf die Patenterteilung: **13.02.2008**
(21) Anmeldenummer: 00108695.8
(22) Anmeldetag: 22.04.2000
(51) Int. Cl.: H02B 1/04, H02B 1/015

(54) **Netzanschluss-Tischgerät**
Tabletop network connector
Appareils de table connectés au réseau

(30) Priorität: 07.05.1999 DE 19927354
(43) Veröffentlichungstag der Anmeldung: 08.11.2000
(73) Patentinhaber: Pöllet, Wilfried, 90596 Schwanstetten (DE)
(72) Erfinder: Pöllet, Wilfried, 90596 Schwanstetten (DE)
(74) Vertreter: Führing, Dieter

(56) Entgegenhaltungen:
- DE-A- 3 324 454
- DE-A- 4 108 082

## Beschreibung

Die Erfindung betrifft ein Tischgerät gemäß der im Oberbegriff des Anspruches 1 angegebenen Gattung.

Ein solches Tischgerät ist aus dem Patent DE 44 37 220.5 als Netzanschlußeinheit für insbesondere die nachträgliche Schreibtisch-Elektrifizierung bekannt. Das Gerät ist unterdessen auf dem Markt und bewährt sich hinsichtlich seines Konzeptes, durch Nachrüsten längs eines Tischplatten-Randes flexibel einsetzbar zu sein, nämlich kurzfristig oberhalb der Arbeitsfläche leicht erreichbar Netzenergie geschaltet und ungeschaltet zur Verfügung stellen zu können. Allerdings ergibt das dort für die Montage bis unter die Plattenebene hinuntergezogene und dabei um die rückwärtige Plattenkante herumgezogene Gehäuse ein recht wuchtiges Gebilde; und angesichts des steigenden Einsatzes mobiler Geräte, die zur Schonung ihrer Batterie im Büro lieber aus dem stationären Netz betrieben werden, ist das vorbekannte Tischgerät mit seiner festen Vorgabe der Anzahl und der Verschaltung von Starkstromsteckdosen für künftige Anforderungen eventuell noch nicht flexibel genug.

Aus dem DE-GM 76 02 708 ist eine gattungsähnliche Netzanschlußeinheit zur Verteilung elektrischer Energie bekannt, bei der untereinander gleiche quaderförmige oder pultartige Gehäuse mit mindestens zwei Steckdosen (davon eine oben und eine seitlich am Gehäuse) und mindestens einem Schalter für die Unterbrechung der Stromzufuhr vorgesehen sind, die, unter Speisung der Steckdosen und erforderlichenfalls einer Durchverdrahtung aus nur einer Netzleitung, über Kupplungsstecker direkt aneinandergereiht in ein Leuchtenband eingefügt oder über Zwischenkabel flexibel miteinander verbunden werden können. Das für den Einsatz am Arbeitstisch allein interessierende direkte Zusammenstecken einer größeren Anzahl solcher Gehäuse mit Verwendung von Steckerpaarungen zur gleichzeitigen mechanischen Aneinanderreihung und elektrischen Durchverbindung ist aber elektromechanisch instabil und damit auch sicherheitstechnisch kritisch; und die Beschränkung auf Starkstrom-Steckdosen stellt für die Verwendbarkeit eines solchen Systems im modernen Büroalltag eine spürbare Einschränkung dar.

Deshalb liegt vorliegender Erfindung die Aufgabe zugrunde, ein Tischgerät gattungsgemäßer Art dahin weiterzubilden, daß es bei gefälligerer Gestaltungsmöglichkeit hinsichtlich wechselnder Anforderungen noch flexibler einsetzbar ist.

Diese Aufgabe ist erfindungsgemäß dadurch gelöst, daß gemäß dem Hauptanspruch das Tischgerät aus nebeneinander gelegenen Modulen von im vertikalen Querschnitt untereinander gleicher Grundform zusammengesteckt ist, die - je nach der aktuellen Anforderung sehr variabel bestückbar - gut erreichbar auf der Tischplatte ruhen. Dabei besteht solch eine Bestückung wahlfrei aus Starkstrom-Steckdosen für den Betrieb von Geräten und aus Schwachstrom-Steckdosen für den Informationsaustausch; aber das Tischgerät kann auch noch ganz anders ausgestattete Module aufweisen kann, etwa mit Schaltern und/oder Sicherungen für die an die Starkstrom-Steckdosen angeschlossenen Geräte ebenso wie für nur durch dieses Tischgerät durchgeschleifte aber von hier aus zu schaltende Versorgungs-Leitungen. Auch Module mit Telekom-Steckem zum Anschluß von Endgeräten und solche mit Utensilienbehältnissen - seien sie nun offen oder etwa mittels Klappdeckeln verschließbar - bzw. mit Stecklöchern für Schreibgerät stehen zum Aufschieben auf eine durchgehende Befestigungs-Schiene zur Verfügung. Für die Fixierung der so zum Tischgerät bestückten Schiene sind Schraubzwingen zweckmäßig, die von rückwärts, dabei den Rand der Tisch-Platte umschließend, in Endkappen eingeschoben werden, welche die Modul-Aufreihung beiderseitig abschließen und dabei die Stirnenden der Befestigungs-Schiene abdecken.

Das erfindungsgemäße Netzanschluß-Tischgerät wird also längs einer Befestigungs-Schiene aus gestalterisch gleichen Modulen zusammengestellt, die sehr unterschiedlich ausgerüstet sein können; nämlich insbesondere mit Stark- und Schwachstrom-Steckdosen, aber auch mit Schaltern und Sicherungen für die Steckdosen oder für nur durchgeschleifte Leitungen. Weitere Module können mit Behältern oder mit Ständern für Arbeitstisch-Utensilien bestückt sein. Beiderseits der aufgereihten Module werden die vorstehenden Enden der Schiene durch Endkappen abgedeckt, die mit von hinten zugänglichen Steckverbindern zur Netz-Einspeisung bzw. -Weiterleitung ausgestattet sind und die Kanäle zum Einstecken von Schraubzwingen für die Befestigung des Tischgerätes am Rand einer Arbeits-Platte aufweisen.

Problematisch kann allerdings der Anschluß werden, wenn es sich nicht um Netz- oder einfache Telekommunikations- sondern um Datenleitungs-Steckdosen handelt. Denn einerseits sind die mit sehr vielen Adern bestückt, deren korrekte Verbindung zu Buchsenanschlüssen entsprechend aufwendig und fehlerträchtig ist; und vor allem sollen aus Gründen des Datenschutzes und der Übertragungssicherheit möglichst wenig Trennstellen (wie Steckverbinder) im Zuge von Datenleitungen von der Raumeinspeisung zum Endgerät (Rechner oder Monitor) vorkommen. Die vorliegende Erfindung bietet auch eine Lösung für dieses zusätzliche Problem, wobei diese Lösung uch unabhängig von der Modul-Aufreihung und -Befestigung für selbständig schutzfähig erachtet wird. Dafür wird erfindungsgemäß auf die im Handel schon mit angeschlagenen Steckinstallationen konfektioniert verfügbaren Datenleitungen zurückgegriffen. Deren Steckinstallationen werden nun aber nicht mehr als Übergabestellen benutzt, sondern sie finden selbst schon als die Steckdosen -Steckstellen Einsatz; nämlich indem sie bei angeschlossenen verbleibenden Leitungen form- und / oder kraftschlüssig in das Steckdosengehäuse so eingesetzt werden, daß sie danach von außerhalb des Steckdosen-Gehäuses unmittelbar für den Endgeräteanschluß zugänglich sind.

Hinsichtlich vorteilhafter Weiterbildungen und Abwandlungen der erfindungsgemäßen Lösung wird außer auf die weiteren Ansprüche auch auf die nachfolgende Beschreibung eines bevorzugten Ausführungsbeispieles verwiesen, wie es in der Zeichnung skizziert ist. Darin zeigt, angenähert maßstabsgerecht aber stark vereinfacht,
- Fig. 1: in perspektivischer Ansicht bei unterbrochener Darstellung ein aus gleichen, pultförmigen Modulen zwischen zwei Endkappen aufgereihtes Tischgerät,
- Fig. 2: eine Endkappe in seitlicher Innenansicht,
- Fig. 3: einen Modul mit Netzspannungs-Steckdose im vertikalen Querschnitt,
- Fig. 4: einen Modul mit Telekommunikations-Steckdose im vertikalen Querschnitt,
- Fig. 5: eine Schraubzwinge zur wieder lösbaren Befestigung des Tischgerätes am Rande einer Platte und
- Fig.6: eine Modul-Aufreihung entsprechend derjenigen in den vorangehenden Figuren, nun aber unter Berücksichtigung eines integralen Anschlusses vorkonfektionierter Datenleitungen.

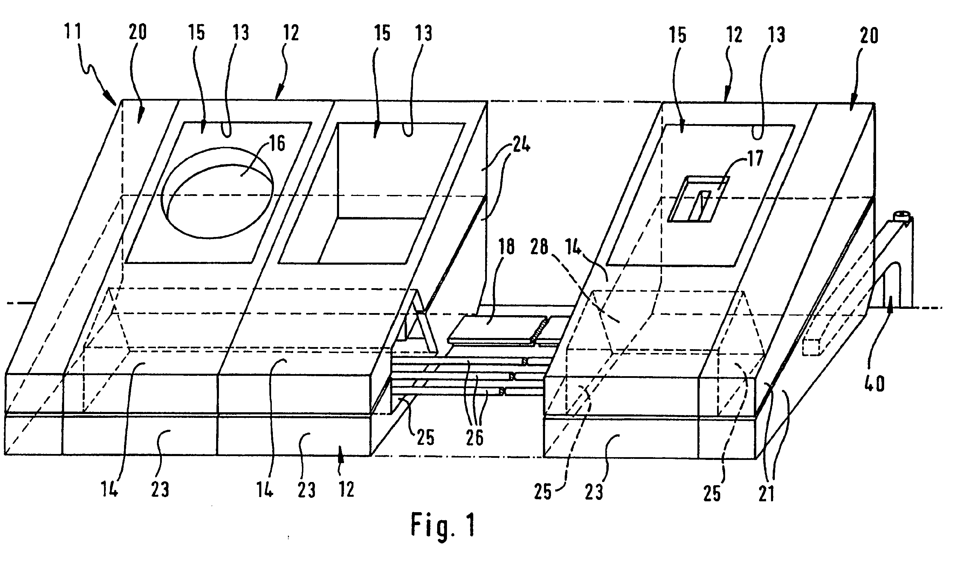

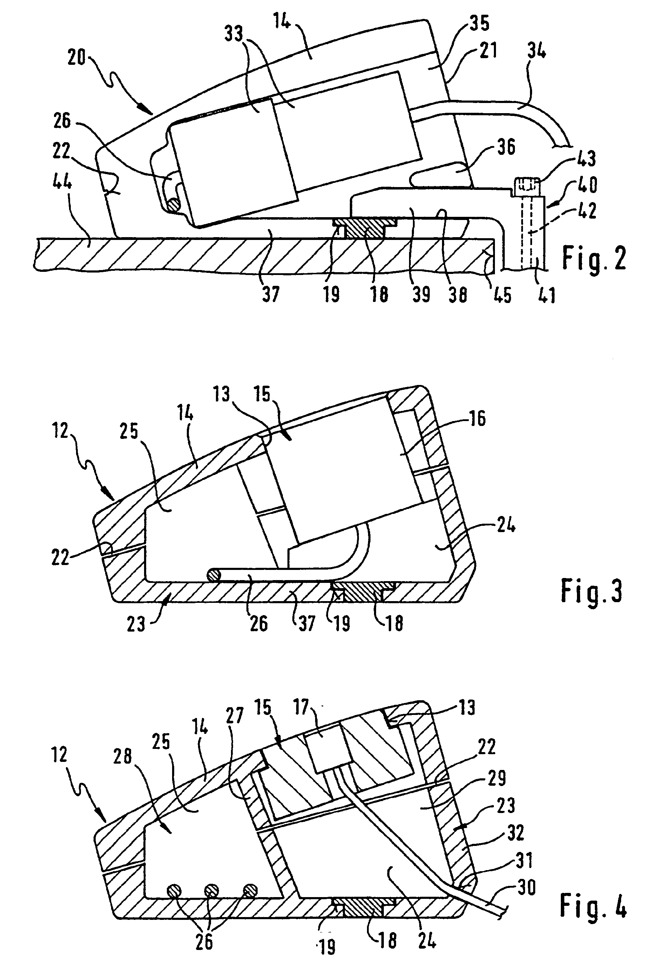

Wie in Fig. 1 skizziert ist das erfindungsgemäße Tischgerät 11 aus mehreren untereinander im wesentlichen gleichen Modulen 12 mit pultförmig geneigten, vorzugsweise leicht geschwungen verlaufenden Deckplatten 14 zusammengesetzt Die Module 12 unterscheiden sich von einander vor allem durch ihre jeweilige Zweckbestimmung. Dafür sind die Module 12 im Bereiche von Öffnungen 13 in ihren Deckplatten 14 mit Einsätzen 15 ausgestattet, die z.B. gemäß Fig. 3 eine Schutzkontakt-Steckdose 16 zum Anschluß eines elektrischen Verbrauchers an ein Starkstrom-Hausnetz oder gemäß Fig. 4 eine Telekommunikations-Steckdose 17 zum Anschluß eines Endgerätes an ein Kommunikations- bzw. Datennetz aufweisen können. Weitere Module 12 (in der Zeichnung nicht dargestellt) mögen etwa mit Sicherungen und/oder mit Schaltern ausgestattet sein, die nach dem Verdrahten der zum Tischgerät 11 zusammengesteckten Module 12 in Stromkreisen vor Steckdosen (in anderen Modulen 12 dieses Tischgerätes 11) oder in lediglich hierfür durch dieses Tischgerät 11 hindurchgeschleiften Leitungen 26 liegen. Bei den Einsätzen 15 kann es sich aber auch um Aufnahmen für Schreibtischutensilien (wie Sammelbehälter für Klammern) und/oder um Boxen bzw. Einstecklöcher für Schreibgerät und dgl. wie etwa Bleistifte, Scheren, Zirkel oder Lineale handeln.

Vorzugsweise ist die Gestaltung der einzelnen Module 12 und damit auch der Eindruck des daraus zusammengestellten Tischgerätes 11 insgesamt nicht so kantig, wie in Fig. 1 skizziert, sondern sie weist gefällig abgerundete Kanten und beiderseits der leicht geschwungen verlaufenden Deckplatte 14 nach vorne geneigte Vorder- und Rückwände 32 auf, wie es sich aus den Querschnittsdarstellungen von Modulen 12 gemäß Fig. 3 und Fig. 4 ergibt.

Diese in ihren Grundkörpern geometrisch weitgehend übereinstimmenden Module 12 sind bis zu gegenseitiger Anlage verschiebbar auf eine biegesteife, im Querschnitt bevorzugt wie skizziert T-förmig profilierte Befestigungs-Schiene 18 aufgereiht. Die verläuft dann durch miteinander fluchtende Profilnuten 19 in den Bodenbereichen der Module 12 (Fig. 1) hindurch Die Schiene 18 weist eine etwas größerer Länge auf, als die Gesamtbreite der zum Tischgerät 11 nebeneinander angeordneten Module 12 mißt. Das jeweilige Ende der dadurch beiderseits aus deren Gruppierung seitlich etwas hervorstehenden Schiene 18 wird von einem Sackloch mit entsprechend T-förmigem Querschnitt in hier formschlüssig aufgesetzten Endkappen 20 (Fig. 2) aufgenommen. Diese weisen quer zur Schiene 18 den gleichen Querschnitt wie die Module 12 auf, aber sie sind einseitig mit einer durchgehenden Seitenwand ganz geschlossen. Eine in den Modulen 12 vorhandene Teilungsfuge 22, längs derer jeweils deren haubenförmige Deckplatte 14 aus einer Verrastung gelöst und vom Sockelteil 23 abgehoben werden kann, setzt sich aus dekorativen Gründen über die Seitenwand 21 als Attrappe fort, wie in der Zeichnung berücksichtigt.

Die Seitenwände 24 der Module 12 enthalten im Bereich vor den Einsätzen 15 Öffnungen 25 zum Durchtritt von Leitungen 26, die einfach zwischen den Endkappen 20 durchgeschleift sein können, die bevorzugt aber der Versorgung der Haushaltsnetz-Steckdosen 16 von einer der Endkappen 20 her dienen. Bei einem Modul 12, der mit einer Telekom-Dose 17 ausgestattet ist, ist vor deren Einsatz 15 eine Trennwand 27 aus isolierendem Material eingefügt oder bevorzugt fest eingeformt, um einen zwischen den seitlichen Öffnungen 25-25 durchlaufenden Hochspannungskanal 28 zuverlässig vom dahinter gelegenen Niederspannungsraum 29 zu trennen. Die an die Telekom-Dose 17 angeschlossene mehradrige Niederspannungs-Leitung 30 ist von außen kommend durch ein Loch 31 im abgeschrägten unteren Randbereich der Modul-Rückwand 32 hindurch in den Niederspannungsraum 29 eingeführt.

Statt der gemäß Fig. 1 durch die seitlichen Öffnungen 25 aus- und eintretenden Hochspannungs-Leitungen 26 können in die Modul-Seitenwände 24 aber auch Steckverbinder (nicht dargestellt) bündig oder versenkt eingelassen sein, die dann beim Zusammenschieben von einander benachbarten Modulen 12 auf der Schiene 18 mittels Überbrückungskupplungen miteinander verbunden werden. Das vermeidet die Notwendigkeit eines Einziehens von an die Starkstrom-Dosen 16 anzuschließenden, vorkonfektionierten Kabelbäumen nach dem Zusammenstecken der Module 12, die dann zuvor schon zwischen den Steckverbindern und den Dosen 16 verschaltet werden können.

Die Einspeisung und ggf. die Ausgabe des Laststromes erfolgt über verpolungssicher kodierte flache Steckverbinder 33, wie sie etwa als WIELAND-Steckverbinder am Markt sind. Von denen ist dafür jeweils ein Kupplungsstück (mit Steck-Stiften bei der Einspeisung bzw. mit Steck-Buchsen am Ausgang zur nächstfolgenden Einspeisung in ein benachbart angeordnetes Tischgerät, nicht gezeichnet) an der sichtabgelegenen Innenseite der geschlossenen Seitenwand 21 einer Endkappe 20 befestigt, etwa festgeschraubt. Das dazu komplementäre Kupplungsstück mit dem Speisekabel 34 erfahrt beim Steckvorgang eine Führung in einem flachen, zum benachbarten Modul 12 hin offenen Führungs-Kanal 35 zwischen einer an die Wand 21 nach innen angeformten Rippe 36 (Fig. 2) und der Deckplatte 14. Dadurch verläuft dieser seitlich vom benachbarten Modul 12 abgedeckten Kanal 35 etwa parallel zur gegenüber der Bodenplatte 37 pultförmig geneigten Deckplatte 14.

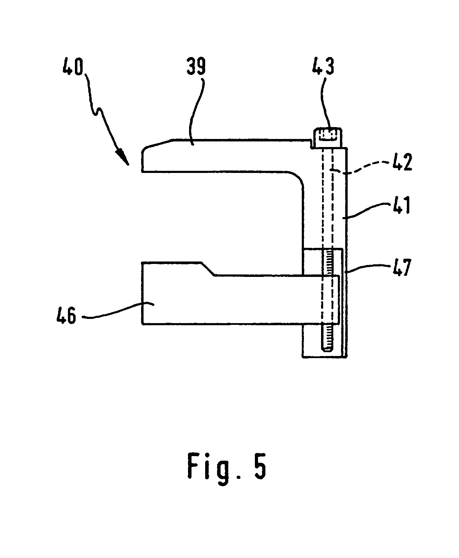

Parallel zur Bodenplatte 37 dagegen verläuft zwischen dieser und der Rippe 36 ein dementsprechend ebenfalls zum benachbarten Modul 12 hin offener Einsteck-Kanal 38 für den Klemmschenkel 39 einer L-förmigen Schraubzwinge 40 (Fig. 5). Ihr zweiter Schenkel 41 ist achsparallel durchbohrt und mit einer Spannschraube 42 bestückt. Deren Innensechskant-Schraubenkopf 43 ist hinter dem Kanal 35 von oben erreichbar. Das vermeidet umständliche Handhabungen am schlecht zugänglichen hinteren Rand 45 unter einer Tischplatte 44, wo häufig auch noch ein Kabelkanal in relativ geringem Abstand vom Rand 45 verläuft. Bei einem dicht benachbartem Kabalkanal dürfte auch aus Sicherheitsgründen keine Verschraubung mittels einer seitlich ausladenden Flügelmutter vorgenommen werden.

Beim Austritt des freien Endes der Spannschraube 42 aus dem Spann-Schenkel 43 heraus trägt sie den dadurch höheneinstellbaren Gegenschenkel 46 mit Innengewinde als Schrauben-Mutter. Damit der Schenkel 46 nicht beim Anziehen und beim Lösen mit der verdrehten Schraube 42 herumschwenken kann, ohne Anlagekraft gegen die Tischplatte 44 aufzubauen bzw. ohne sich weiter von ihr abzuheben, setzt der Spannschenkel 41 sich parallel zur Spannschraube 42 als im Querschnitt L-förmige Stützwand 47 nach unten fort. Dadurch kann der Gegenschenkel 46 mit dem Drehen der Schraube 42 nur einen Schwenkwinkel von etwa 90° vollführen; dann liegt er gegen einen Schenkel der Stützwand 47 an und verlagert fortan seine Höhenlage längs der weiterhin verdrehten Schraube 42.

Das aus mehreren Modulen 12 zwischen beiderseits abschließenden Endkappen 20 auf der durchlaufenden Schiene 18 zusammengesteckte und bei dafür von den Sockelteilen 23 abgenommenen Deckplatten 14 verdrahtete Tischgerät 11 wird also an der Arbeits-Platte 44 mittels der Schraubzwingen 40 befestigt, deren Klemmschenkel 39 bis zum Übergreifen der Schiene 18 in den Kanal 38 der jeweiligen Endkappe 20 eingeschoben wird, um daraufhin die Spannschraube 42 anzuziehen.

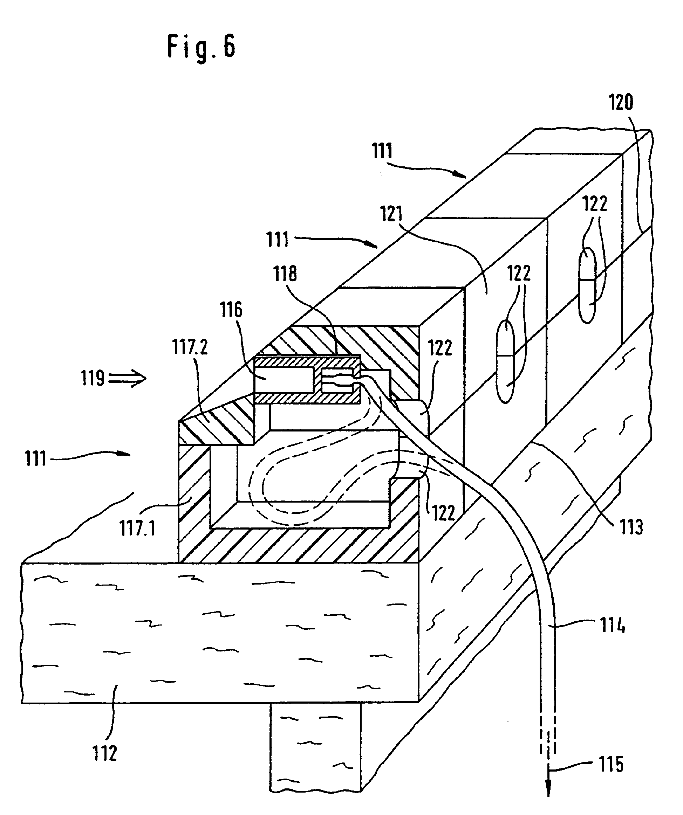

Auch die in Fig.6 skizzierte Tisch- oder Arbeitsplatz-Steckdose 111 ist beispielsweise an der Arbeitsplatte 112 eines Arbeitstisches, vorzugsweise am hinteren Rand 113 der Platte 112, mittels versenkt eingreifender Schraubklemmen lösbar befestigt. Entsprechend der obigen Darstellung sind gewöhnlich mehrere solcher modular gestalteter Tischsteckdosen 111 modulartig aneinandergereiht. Die einzelnen Module (also Steckdosen 111) können wieder unterschiedliche Versorgungsaufgaben wahrnehmen, etwa an unterschiedliche Netzleitungen stabilisierter und allgemeiner Versorgungsnetze, an einfache Kommunikationsleitungen aber auch an komplexe Datenleitungen 114 angeschlossen sein. Diese Leitungen 114 kommen beispielsweise von einer Unterboden-Installation 115 in der Nähe des Arbeitsplatzes und sind dort mit ihren überschüssigen Längen in einen Staukasten schlangenförmig eingelegt, wie in der eigenen nicht vorveröffentlichten DE-GM 2 99 18 768.3 näher beschrieben. Netz- und Kommunikationsleitungen sind bei der Unterflur-Installation 115 an Übergabestellen in Form von mechanisch kodierten Steckverbindern geführt, an denen sternförmig von Raum-Einspeisepunkten her kommende Versorgungsleitungen enden.

Eine Datenleitung 114 soll wie eingangs schon erwähnt allerdings u.a. aus Gründen der Betriebssicherheit möglichst ohne Trennstellen von der Raumeinspeisung bis zum Geräteanschluß geführt werden und wird deshalb ununterbrochen durch die Unterflur-Installation 115 - ggf. ebenfalls unter Einschlingen momentan nicht benötigter Leitungslänge in deren Stau-Kasten - hindurch bis zur Daten-Tischsteckdse 111 an der Arbeitsplatte 112 hinauf gezogen.

Solche sehr viele Adern führenden Datenleitungen 114 sind in großen Längen mit Vielfach-Steckstellen 116 samt Kabel-Zugentlastung konfektioniert kommerziell verfügbar. Um sie an eine der mit entsprechenden Steck-Buchsen 116 ausgestatteten Steckdosen 111 anzuschließen, muß dann allerdings die schon an die Mehrfachleitung 114 angeschlagene Steckstelle 116 wieder abgenommen und jede der dadurch freigelegten Adern an den zugeordneten der Steckanschlüsse in der Dose angeklemmt oder angelötete werden. Das ist ersichtlich sehr arbeitsaufwendig und fehlerträchtig, was gerade den Zuverlässigkeitsanforderungen an Datenleitungen 114 besonders abträglich ist.

Deshalb ist bei den erfindungsgemäßen Daten-Tischsteckdosen 111 vorgesehen, deren im Kunststoff-Spritzguß erstellten Gehäuse 117 jeweils in ein Unterteil 117.1 und ein leicht davon abnehmbares, etwa damit verschraubtes oder einfach verrastetes Oberteil 117.2 zu trennen. Das geräteseitig etwas pultartig abgeschrägte, schalenförmige Gehäuse-Oberteil 117.2 ist innen mit einer kraft- und/oder formschlüssig gestalteten, vorzugsweise gleich im Kunststoff-Spritzguß mit eingeformten Aufnahme 118 für eine Daten-Steckstelle 116 etwa nach Art einer großen sog. Texas-Buchse ausgestattet. Die Steckstelle 116 bleibt nun samt ihrer Zugentlastung an das entsprechend konfektioniert angelieferte Kabel 114 angeschlagen, wenn sie - etwa quer zur Steckrichtung 119 des Geräteanschlusses - manuell von der Gehäuse-Teilungsfuge 120 her in die Aufnahme 118 des abgenommenen Gehäuse-Oberteiles 117.2 rastend eingesetzt wird, aus der sie bedarfsweise entgegengesetzt auch wieder herausnehmbar ist.

Die vieladrige und deshalb nicht sehr flexible Leitung 114 verläuft beim Aufsetzen des so bestückten Oberteiles 117.2 auf das Gehäuse-Unterteil 117.1 von der Rückseite der Buchse 116 durch einen in der Rückwand 121 des Gehäuses 117 wie skizziert beiderseits (oder nur auf einer Seite) der Teilungsfuge 120 quer zu dieser bedarfsweise aufzubrechenden oder schon freigesparten kurzen Schlitz 122 von der Breite etwa der Dicke der Leitung 116 (also nicht ihrer viel großvolumigeren, fest angeschlagenen Steckbuchse 116) aus dem Gehäuse 117 heraus zur Unterflur-Installation 115. Die Leitung 114 kann aber auch zunächst wie strichpunktiert skizziert zur weiteren Entlastung des Einsatzes der Vielfach-Buchse 116 gegen wechselnde Zug- und Biegebeanspruchungen vor ihrem Durchtritt durch den Schlitz 122 in das Gehäuse-Unterteil 117.1 der Steckdose 111 eingeschlungen werden.

Wenn etwa im Zuge von Umrüstungen eine Datenleitung 114 an eine andere Steckdose 111 dieser Modulgruppe oder einer anderen Modulgruppe gelegt werden muß, dann müßten normalerweise die einzelnen Adern zunächst von den Steckanschlüssen der Buchse 116 gelöst und anderweitig wieder befestigt werden. Das wäre sehr arbeitsaufwendig, wenn es sich um Lötanschlüsse handelt. Bei Klemmanschlüssen dagegen besteht in der Praxis darüberhinaus die große Gefahr von Kerbspannungs-Sprödbrüchen der schon einmal eingeklemmt gewesenen Adern, wenn die nun für den neuerlichen Anschluß zurechtgebogen werden. Nach der erfindungsgemäßen Lösung dagegen ist es nur erforderlich, die Gehäuse-Oberteile 117.2 mit ihren weiterhin angeschlossen verbleibenden Leitungen 114 entsprechend zu vertauschen - allenfalls die Steckstellen 116 mit ihren weiterhin angeschlossen verbleibenden Leitungen 114 zwischen unterschiedlich positionierten Oberteilen 117.2 auszutauschen. Das gilt entsprechend, wenn ein Datengeräteanschluß verlegt werden muß, um etwa einer zusätzlichen Stromzuführung Platz zu machen : Dann braucht lediglich das mit der Datenbuchse 116 ausgestattete Gehäuseoberteil 117.2 samt angeschlossen verbleibender Leitung 114 abgenommen und auf ein anderes Unterteil 117.1 versetzt zu werden, um an der dadurch freigemachten Position auf das dort verbliebene Unterteil 17.1 etwa ein Oberteil 117.1 mit Netzsteckdose aufzustecken.

Wenn also eine konfektionierte Daten-Leitung 114 mit ihrer schon angeschlagenen Vielfach-Steckstelle 116 so in des geteilte Gehäuse 117 einer Arbeitsplatz-Steckdose 111 eingesetzt wird, daß diese direkt angeschlagene Steckbuchsen-Installation 116 selbst am Gehäuse-Oberteil 117.2 von außen als Daten-Steckbuchse für einen Geräteanschluß zugänglich ist, dann sind dadurch unerwünschte zusätzliche Trennstellen in der Datenleitung 114 auf ihrem Weg zum Datenendgerät vermieden, und ein Wechsel in der Einspeise-Zuordnung kann einfach durch Austausch von so bestückten Gehäuse-Oberteilen 117.2 bzw. der hier eingeführten und mittels ihrer Steckinstallationen 116 darin wieder-lösbar festgelegten konfektionierten, vieladrigen Datenleitungen 114 erfolgen, ohne dafür deren Adern freilegen und umklemmen zu müssen.

## Patentansprüche

1. Netzanschluß-Tischgerät (11), dessen Gehäuse mit wenigstens einer Netzanschluß-Steckdose (16) ausgestattet ist, wobei es aus mehreren auch unterschiedlich bestückbaren Modulen (12) zusammengesetzt ist, die nebeneinander auf eine durchgehende Befestigungs-Schiene (18) aufgereiht sind, wobei diese Modul-Aufreihung (12-12-12) durch mit Steckverbindern (33) zur Netz-Einspeisung und -Weiterleitung ausgestatteten Endkappen (20) abgeschlossen ist, **dadurch gekennzeichnet daß** die Aufreihung (12) über die Endkappen (20) am Rand (45) der Arbeits-Platte (44) fixierbar ist.

2. Tischgerät nach Anspruch 1, **dadurch gekennzeichnet, daß** der Steckverbinder (33) in einer Endkappe (20) von hinten über dem Rand (45) der Tischplatte (44) zugänglich und dabei in einem Kanal (35) in der Endkappe (20) geführt ist.

3. Tischgerät nach einem der vorangehenden Ansprüche, **dadurch gekennzeichnet, daß** eine biegesteif profilierte Schiene (18) durch miteinander fluchtende Profilnuten (19) in den Bodenbereichen der Module (12) verläuft.

4. Tischgerät nach einem der vorangehenden Ansprüche, **dadurch gekennzeichnet, daß** die Endkappen (20) jeweils mit einem Kanal (38) zum Einschieben eines L-Schenkels (39) einer Schraubzwinge (40) ausgestattet sind.

5. Tischgerät nach dem vorangehenden Anspruch, **dadurch gekennzeichnet, daß** die Schraubzwinge (40) mit einer Stützwand (47) als Dreh-Anschlag für ihren von der Spannschraube (42) getragenen weiteren, höheneinstellbaren Schenkel (46) ausgestattet ist.

6. Tischgerät nach einem der vorangehenden Ansprüche, **dadurch gekennzeichnet, daß** es aus Modulen (12) mit auf Sockelteilen (23) zu Verdrahtung oder Austausch abhebbar angeordneten Deckplatten (14) mit Starkstrom- oder Schwachstrom-Steckdosen (16; 17), mit Schaltern oder Sicherungen und/oder mit nicht-elektrischen Einrichtungen wie insbesondere Behältnissen oder Halterungen für Arbeitstisch-Utensilen zusammengefügt ist.

7. Tischgerät nach einem der vorangehenden Ansprüche, **dadurch gekennzeichnet, daß** ein mit einer Niederspannungs-Steckdose (16) ausgestatteter Modul (12) einen durch seine Seitenwände (21) hindurch verlaufenden Hochspannungskanal (28) aufweist, der mittels einer isolierenden Trennwand (27) von einem Niederspannungsraum (29) im Sockelteil (23) getrennt ist.

8. Tischgerät nach einem der vorangehenden Ansprüche, **dadurch gekennzeichnet, daß** es ein Gehäuse (117) aufweist, in das eine an eine Leitung (114) angeschlagene Steckstelle (116) austauschbar eingesetzt ist.

9. Tischgerät nach dem vorangehenden Anspruch, **dadurch gekennzeichnet, daß** die Leitung (114) von der Steckstelle (116) aus durch einen Schlitz (122) an einer Gehäuse-Teilungsfuge (120) aus dem Gehäuse (117) heraus verläuft.

10. Tischgerät nach einem der beiden vorangehenden Ansprüche, **dadurch gekennzeichnet, daß** in ihr die Steckstelle (116) einer Daten-Leitung (114) selbst von außen zugänglich austauschbar befestigt ist.

## Claims

1. Tabletop mains connection device (11), whose housing is equipped with at least one mains connection socket outlet (16), it comprising a plurality of modules (12), which can also be fitted differently and are arranged next to one another in a row on a continuous fixing rail (18), this module row arrangement (12-12-12) being terminated by end caps (20), which are equipped with plug-type connectors (33) for mains infeed and retransmission, **characterized in that** the row arrangement (12) can be fixed via the end caps (20) on the edge (45) of the worktop (44).

2. Tabletop device according to Claim 1, **characterized in that** the plug-type connector (33) is accessible in an end cap (20) from the rear over the edge (45) of the tabletop (44) and in the process is guided in a channel (35) in the end cap (20).

3. Tabletop device according to one of the preceding claims, **characterized in that** a rail (18), which is profiled in such a way that it is rigid, runs through mutually aligned profile grooves (19) in the base regions of the modules (12).

4. Tabletop device according to one of the preceding claims, **characterized in that** the end caps (20) are each equipped with a channel (38) for inserting an L-limb (39) of a screw clamp (40).

5. Tabletop device according to the preceding claim, **characterized in that** the screw clamp (40) is equipped with a supporting wall (47) as a rotary stop for its further vertically adjustable limbs (46), which are borne by the tensioning screw (42).

6. Tabletop device according to one of the preceding claims, **characterized in that** it is assembled from modules (12) with cover plates (14), which are arranged on socket parts (23) in such a way that they can be lifted off for wiring or replacement purposes, with heavy-current or weak-current socket outlets (16; 17), with switches or fuses and/or with nonelectrical devices such as, in particular, containers or holders for worktop utensils.

7. Tabletop device according to one of the preceding claims, **characterized in that** a module (12) which is equipped with a low-voltage socket outlet (16) has a high-voltage channel (28), which runs through its side walls (21) and is separated from a low-voltage area (29) in the socket part (23) by means of an insulating partition (27).

8. Tabletop device according to one of the preceding claims, **characterized in that** it has a housing (117), into which a socket point (116) fixed to a line (114) is inserted in such a way that it is replaceable.

9. Tabletop device according to the preceding claim, **characterized in that** the line (114) runs from the socket point (116) through a slot (122) at a housing separating line (120) out of the housing (117).

10. Tabletop device according to one of the two proceeding claims, **characterized in that** the socket point (116) of a data line (114) itself is fixed in it in such a way that it is accessible from the outside and is replaceable.

## Revendications

1. Appareil de table à connexion au réseau (11) dont le boîtier est équipé d'au moins une prise de connexion au réseau (16), celui-ci étant constitué de plusieurs modules (12) pouvant également être équipés différemment qui sont alignés les uns à côté des autres sur un rail de fixation (18) continu, cet alignement de modules (12-12-12) étant terminé par des embouts (20) équipés de connecteurs enfichables (33) pour l'injection et la retransmission du réseau, **caractérisé en ce que** l'alignement (12) peut être fixé au bord (45) du plan de travail (44) par le biais des embouts (20).

2. Appareil de table selon la revendication 1, **caractérisé en ce que** le connecteur enfichable (33) dans un embout (20) est accessible depuis l'arrière au-dessus du bord (45) de la plaque de table (44) et il est ici guidé dans un canal (35) dans l'embout (20).

3. Appareil de table selon l'une des revendications précédentes, **caractérisé en ce qu'**un rail profilé (18) rigide s'étend à travers des rainures profilées (19) alignées les unes sur les autres dans les zones du fond des modules (12).

4. Appareil de table selon l'une des revendications précédentes, **caractérisé en ce que** les embouts (20) sont à chaque fois munis d'un canal (38) pour l'insertion d'une branche de L (39) d'un serre-joint (40).

5. Appareil de table selon la revendication précédente, **caractérisé en ce que** le serre-joint (40) est équipé d'une paroi d'appui (47) faisant office de butée de rotation pour son autre branche (46) réglable en hauteur et portée par la vis de serrage (42).

6. Appareil de table selon l'une des revendications précédentes, **caractérisé en ce qu'**il est constitué de modules (12) munis de plaques de recouvrement (14) disposées sur des parties de socle (23) pouvant être soulevées pour le câblage ou le remplacement, munis de prises pour courant fort ou courant faible (16, 17), munis de commutateurs ou de fusibles et/ou de dispositifs non électriques comme notamment des récipients ou des supports pour des ustensiles de table de travail.

7. Appareil de table selon l'une des revendications précédentes, **caractérisé en ce qu'**un module (12) équipé d'une prise à basse tension (16) présente un canal à haute tension (28) qui s'étend à travers ses parois latérales (21), lequel est séparé d'un espace à basse tension (29) dans la partie de socle (23) au moyen d'une paroi de séparation isolante (27).

8. Appareil de table selon l'une des revendications précédentes, **caractérisé en ce qu'**il présente un boîtier (117) dans lequel est inséré de manière interchangeable un point d'enfichage (116) accroché à un câble (114).

9. Appareil de table selon la revendication précédente, **caractérisé en ce que** le câble (114) s'étend hors du boîtier (117) depuis le point d'enfichage (116) en passant à travers une fente (122) sur un joint de séparation du boîtier (120).

10. Appareil de table selon l'une des deux revendications précédentes, **caractérisé en ce que** le point d'enfichage (116) d'un câble de données (114) est fixé dans celui-ci de manière à être interchangeable et accessible même depuis l'extérieur.
